# EUROPEAN PATENT APPLICATION

(11) **EP 4 687 320 A1**
(43) Date of publication of application: **04.02.2026**
(21) Application number: 24192248.3
(22) Date of filing: 01.08.2024
(51) Int. Cl.: H04L 9/08, H04L 9/32

(54) **METHOD FOR UPDATING A QUANTUM-RESISTANT CRYPTOGRAPHIC KEY PAIR AND CERTIFICATE FOR USE IN A PUBLIC-KEY INFRASTRUCTURE**

(71) Applicant: Nagravision Sarl, 1033 Cheseaux-sur-Lausanne (CH)
(72) Inventor: VILLEGAS, Karine, 1033 CHESEAUX-SUR-LAUSANNE (CH); HUNACEK, Didier, 1033 CHESEAUX-SUR-LAUSANNE (CH)
(74) Representative: Santarelli

(57) **Abstract**

A method is proposed for updating, in a public-key infrastructure (PKI), a cryptographic key pair and a certificate for the public key of the key pair, the key pair and the respective certificate associated with a certificate authority. According to such method, a programmable electronic device executes:
- receiving, from the PKI, the certificate;
- generating a quantum-resistant key pair and an updated certificate for the public key of the quantum-resistant key pair; and
- transmitting, to the PKI, the quantum-resistant key pair and the updated certificate.

## Description

### 1. FIELD OF THE DISCLOSURE

The field of the disclosure is that of public-key infrastructure (PKI).

More specifically, the disclosure relates to technics for updating cryptographic keys in such PKI.

### 2. TECHNOLOGICAL BACKGROUND

Quantum computers make use of quantum bits (qubits) that can represent and process a vast amount of data concurrently, thanks to the principles of superposition and entanglement. This gives them the potential to perform certain calculations significantly faster than classical computers.

Most PKIs today rely on cryptographic algorithms that are based on the difficulty of certain mathematical problems, such as the factorization of large integers (RSA algorithm) or the discrete logarithm problem (used in algorithms like Diffie-Hellman key exchange, Digital Signature Algorithm (DSA) and Elliptic-Curve Cryptography (ECC)). These problems are computationally infeasible for classical computers to solve in a reasonable time frame for sufficiently large key sizes, which provides the security for these systems.

However, in 1994, Peter Shor devised a quantum algorithm that can efficiently solve the integer factorization problem and the discrete logarithm problem. Once quantum computers reach a sufficient level of sophistication and qubit coherence - known as quantum supremacy - they will be able to break the security of current cryptographic systems by using Shor's algorithm or similar quantum algorithms.

Because of the threat posed by quantum computing, there's a need to make existing cryptographic systems based on quantum-resistant (also known as post-quantum) algorithms. These new algorithms are designed to be secure against both classical and quantum computing attacks, thus preserving the confidentiality, authenticity, and integrity of communications and data.

In a PKI, entities are assigned digital certificates that verify the ownership of public keys. If quantum computers could break the underlying cryptographic assumptions, they could potentially forge certificates, intercept secure communications, and decrypt sensitive data.

There is thus a need to base the key pairs and certificates in PKIs on quantum-resistant algorithms to ensure continuous security.

In that perspective, governmental and industry organizations are actively researching quantum-resistant cryptographic protocols, with bodies like the National Institute of Standards and Technology (NIST) in the United States leading efforts to standardize Post-Quantum Cryptography (PQC) algorithms. Transitioning to these new cryptographic standards will involve updating the algorithms used to generate key pairs and manages certificates.

However, for the time being, those new standards are still under development and are not as mature as classical cryptographic algorithms like RSA or ECC. Furthermore, different quantum-resistant algorithms may be considered depending on countries.

There is thus a need for having flexibility in the quantum-resistant key pairs and certificates to be used in the PKIs.

### 3. SUMMARY

A particular aspect of the present disclosure relates to a method for updating, in a public-key infrastructure, a cryptographic key pair and a certificate for the public key of the key pair. The key pair and the certificate are associated with a certificate authority. Such method executed by a programmable electronic device comprises: receiving, from the public-key infrastructure, the certificate.

For the received certificate, the method further comprises:
- generating a quantum-resistant key pair and an updated certificate for the public key of the quantum-resistant key pair; and
- transmitting, to the public-key infrastructure, the quantum-resistant key pair and the updated certificate.

Thus, the present disclosure proposes a new and inventive solution for having the key pairs and certificates in a PKI based on quantum-resistant algorithms to ensure continuous security.

More particularly, the present technic proposes the use of a remote programmable electronic device for executing a PQC algorithm (e.g. FIPS 203, FIPS 204, FIPS 205 or Falcon as defined by the US National Institute of Standards and Technology (NIST), or FrodoKEM as defined by the German Federal Office for Information Security (BSI)) and updating both the key pairs with quantum-resistant ones and the associated certificates. Such updated certificate for the public key of a quantum-resistant key pair can be as well a classical certificate, a quantum-resistant certificate or a hybrid certificate.

Accordingly, the PKI itself does not need to have the knowledge of the PQC algorithms to be used. Furthermore, the electronic device being programmable, the PQC algorithms to be used can be updated easily and so do the key pairs and certificates to be used in the PKI. This provides flexibility in the key pairs and certificates to be used in the PKI.

In some embodiments, the programmable electronic device is populated with a root public key of a root certificate authority of the public-key infrastructure. The method further comprises: authenticating the certificate, the authenticating comprising:
- sending an initial challenge to the root certificate authority;
- receiving from the root certificate authority the challenge signed with a root private key of the root certificate authority, the root private key and the root public key forming a key pair; and
- verifying the signed challenge with the root public key delivering a verified challenge.

The generating and the transmitting the quantum-resistant key pair and the respective updated certificate are executed only if the verified challenge is equal to the initial challenge.

Thus, the programmable electronic device checks that it is in communication with the correct PKI through the authentication of the certificate(s). The root public key is populated in the programmable electronic device e.g. by a third-party device in charge of the update of the public-key infrastructure. Such third-party device is typically a different entity than the public-key infrastructure. The root public key is populated in the programmable electronic device by the third-party device e.g. through a key ceremony or sent through a secured communication channel as discussed below.

In some embodiments, the certificate comprises a first certificate associated with a first certificate authority having a given rank in the public-key infrastructure.

The method further comprises: receiving, from the public-key infrastructure, a second certificate associated with a second certificate authority having a rank following the given rank in the public-key infrastructure.

For the received second certificate, the method further comprises:
- generating a quantum-resistant second key pair and an updated second certificate for the public key of the quantum-resistant second key pair; and
- signing the updated second certificate with the private key of the quantum-resistant key pair generated for the first certificate authority.

The transmitting comprises transmitting the signed updated second certificate.

Thus, the programmable electronic device signs (or encrypts) the public key certificate(s) so that the PKI does not need to have the knowledge of the PQC algorithms used.

In some embodiments, the first certificate authority is the root certificate authority.

In some embodiments, the generating the quantum-resistant key pair and the updated certificate implements a Post-Quantum Cryptography standard algorithm.

Such PQC standard algorithm is e.g. a FIPS 203, FIPS 204, FIPS 205 or Falcon algorithm as defined by the NIST, or a FrodoKEM algorithm as defined by the BSI.

In some embodiments, the communication between the programmable electronic device and the public-key infrastructure implements a secured communication channel based on a symmetric key known from the programmable electronic device and from the public-key infrastructure.

Such symmetric encryption scheme is inherently more resistant to threats linked to quantum computing than asymmetric schemes, in particular when the symmetric key is chosen long enough.

In some embodiments, the programmable electronic device is in communication with a third-party device. The communication between the programmable electronic device and the third-party device implements a secured communication channel based on an asymmetric encryption scheme using a first key pair implemented in the programmable electronic device. The method further comprises a set-up phase comprising: receiving, from the third-party device, the symmetric key through the secured communication channel.

Thus, there is no need for a key ceremony between the third-party device and the programmable electronic device. The symmetric key can be populated remotely into the programmable electronic device by the third-party device. The first key pair comprising a first public key and a first private key is e.g. a one-time asymmetric key pair valid a short time slot.

In some embodiments wherein the programmable electronic device executes the authenticating the at least one certificate, the programmable electronic device is in communication with a third-party device. The communication between the programmable electronic device and the third-party device implements a secured communication channel based on an asymmetric encryption scheme using a first key pair implemented in the programmable electronic device. The method further comprises a set-up phase comprising: receiving, from the third-party device, the root public key through the secured communication channel.

In some embodiments wherein the generating the quantum-resistant key pair and the respective updated certificate implements a PQC standard algorithm, the programmable electronic device is in communication with a third-party device. The communication between the programmable electronic device and the third-party device implements a secured communication channel based on an asymmetric encryption scheme using a first key pair implemented in the programmable electronic device. The method further comprises a set-up phase comprising: receiving, from the third-party device, the Post-Quantum Cryptography standard algorithm through the secured communication channel.

Thus, the PQC algorithm(s) used by the programmable electronic device can be updated easily.

In some embodiments, the method further comprises: establishing the secured communication channel based on the asymmetric encryption scheme, the establishing comprising:
- receiving, from the third-party device, a second public key; and
- sending, to the third-party device, a first public key encrypted with the second public key.

Thus, the third-party device is able to decrypt the first public key using its second private key. Having the knowledge of the first public key, the third-party device is able to send to the programmable electronic device whether the symmetric key, the root public key, the PQC standard algorithm, or any relevant data, in an encrypted form using the first public key.

Another aspect of the present disclosure relates to a computer program product comprising program code instructions for implementing the above-mentioned method for updating at least one cryptographic key pair and associated public key certificate (in any of the different embodiments discussed above), when the program is executed on a computer or a processor.

Another aspect of the present disclosure relates to a programmable electronic device comprising means configured for executing all or part of the steps of the above-mentioned method for updating at least one cryptographic key pair and associated public key certificate (in any of the different embodiments discussed above). Thus, the features and advantages of this first device are the same as those of the corresponding steps of said method. Therefore, they are not detailed any further.

### 4. LIST OF FIGURES

Other features and advantages of embodiments shall appear from the following description, given by way of indicative and non-exhaustive examples and from the appended drawings, of which:
- Figure 1 illustrates a PKI communicatively connected to a programmable electronic device and to a third-party device according to one embodiment of the present disclosure;
- Figure 2 illustrates an example of the structural blocks of the third-party device of Figure 1 allowing steps of the method of Figure 4 to be executed according to one embodiment of the present disclosure;
- Figure 3 illustrates an example of the structural blocks of the programmable electronic device of Figure 1 allowing steps of the method of Figure 4 to be executed according to one embodiment of the present disclosure;
- Figure 4 illustrates a flowchart of a method for updating at least one cryptographic key pair and associated public key certificate in the PKI of Figure 1 according to one embodiment of the present disclosure.

### 5. DETAILED DESCRIPTION

In all of the figures of the present document, the same numerical reference signs designate similar elements and steps.

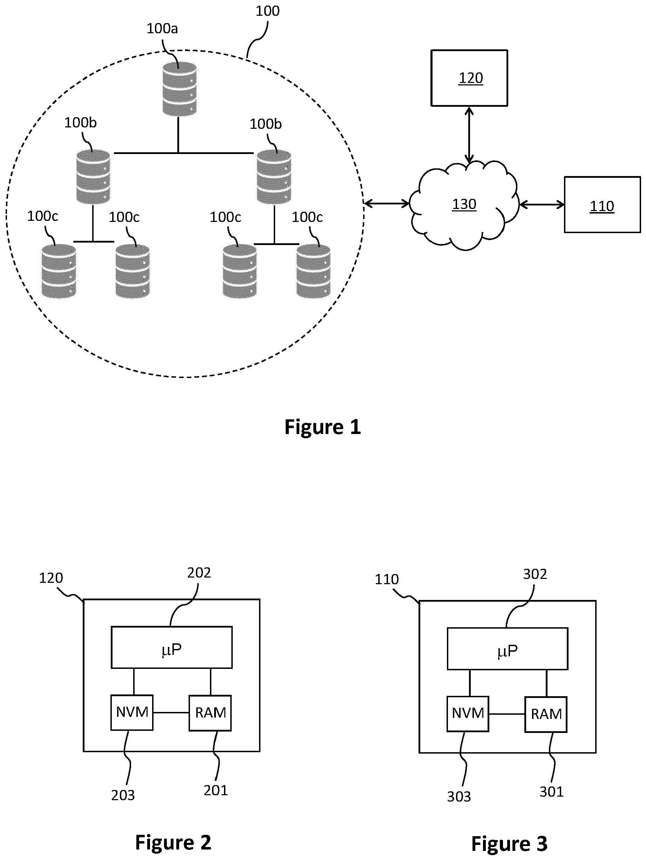

Referring now to **figure 1****,** we illustrate a PKI 100 communicatively connected to a programmable electronic device 110 and to a third-party device 120 according to one embodiment of the present disclosure.

More particular, the PKI 100 is a framework that provides digital security and encryption through the use of public and private cryptographic key pairs. These key pairs are used e.g., to secure sensitive data, facilitate secure communications over the internet, etc. The PKI 100 is typically composed of several entities and components that work together to provide a trusted environment for digital transactions and communications. More particularly, the PKI 100 comprises:
- a root certificate authority 100a which is the trusted entity in the PKI 100;
- intermediate certificate authorities 100b populated with a cryptographic key pair and a respective certificate for the public key of the key pair; and
- issuing certificate authorities 100c also populated with a cryptographic key pair and a respective certificate for the public key of the key pair.

The root certificate authority 100a and the intermediate certificate authorities 100b are offline entities in that the end users don't directly access to those entities. Conversely, the end users access the issuing certificate authorities 100c to get access to respective public keys.

Starting from the root certificate authority 100a down to the issuing certificate authorities 100c, for each certificate authority 100b, 100c a rank can be assigned in the PKI 100. For a given certificate authority 100b (or 100c) of a given rank, the certificate of the given certificate authority 100b (or 100c) is signed with the private key of the certificate authority 100a (or 100b) of previous rank in the PKI 100.

The PKI 100 is communicatively connected to a communications network 130 implementing wired broadband communications links, e.g. xDSL communications links. However, in some embodiments, the communications network 130 implements wireless communications links. In such cases, the communications network 130 is e.g. based on a cellular protocol (e.g. a 3GPP 2G, 3G, 4G or 5G protocol) or on a WiMAX protocol.

Back to Figure 1, the third-party device 120 (e.g. a server of an authority in charge of the management of the PKI 100) is communicatively connected to the communications network 130, and thus to the PKI 100 and to the programmable electronic device 110. The third-party device 120 is in charge of the update of the PKI 100 e.g. through the population of the relevant information in the programmable electronic device 110. Based on this relevant information, the programmable electronic device 110 actively acts for updating the PKI 100. For instance, the third-party device 120 is in charge of the population of the root public key of the PKI 100 in the programmable electronic device 110 for allowing the programmable electronic device 110 to communicate securely with the PKI 100. In a same way, the third-party device 120 can be in charge of the providing of the PQC algorithm to the programmable electronic device 110.

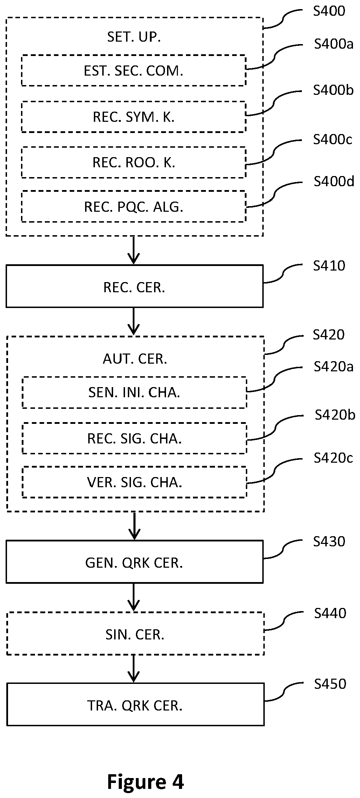

Generally speaking, for updating the PKI 100, the third-party device 120 and the programmable electronic device 110 execute the method for updating at least one cryptographic key pair and associated public key certificate of Figure 4 (according to any of the embodiments disclosed below in relation with Figure 4).

In order to be able to implement all or part of the steps of the method for updating at least one cryptographic key pair and associated public key certificate in the various embodiments disclosed below in relationship with Figure 4, in some embodiments the third-party device 120 comprises (**Figure 2**):
- a non-volatile memory (NVM) 203 (e.g. a read-only memory (ROM), a hard disk, a flash memory, an electrically erasable programmable read-only memory (EEPROM), a magnetic random-access memory (MRAM), etc.);
- a volatile memory 201 (e.g. a random-access memory or RAM) and a processor 302.

The non-volatile memory 203 is a non-transitory computer-readable carrier medium. It stores executable program code instructions, which are executed by the processor 302 in order to enable implementation of some steps of the method described below (method for updating at least one cryptographic key pair and associated public key certificate) in the various embodiments disclosed in relationship with Figure 4.

Upon initialization, the aforementioned program code instructions are transferred from the non-volatile memory 203 to the volatile memory 201 so as to be executed by the processor 202. The volatile memory 201 likewise includes registers for storing the variables and parameters required for this execution.

The steps of the method for updating at least one cryptographic key pair and associated public key certificate may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

Back to Figure 1, the programmable electronic device 110 is communicatively connected to the communications network 130, and thus to the PKI 100 and to the third-party device 120. Such programmable electronic device 110 comprises e.g. one (or more) processor and/or one (or more) field-programmable gate array configured for carrying out the respective steps of the method for updating at least one cryptographic key pair and associated public key certificate in the PKI 100 as discussed below in relation with Figure 4.

In order to be able to implement all or part of the steps of the method for updating at least one cryptographic key pair and associated public key certificate in the various embodiments disclosed below in relationship with Figure 4, in some embodiments the programmable electronic device 110 comprises (**Figure 3**):
- a non-volatile memory (NVM) 303 (e.g. a read-only memory (ROM), a hard disk, a flash memory, an electrically erasable programmable read-only memory (EEPROM), a magnetic random-access memory (MRAM), etc.);
- a volatile memory 301 (e.g. a random-access memory or RAM) and a processor 302.

The non-volatile memory 303 is a non-transitory computer-readable carrier medium. It stores executable program code instructions, which are executed by the processor 302 in order to enable implementation of some steps of the method described below (method for updating at least one cryptographic key pair and associated public key certificate) in the various embodiments disclosed in relationship with Figure 4.

Upon initialization, the aforementioned program code instructions are transferred from the non-volatile memory 303 to the volatile memory 301 so as to be executed by the processor 302. The volatile memory 301 likewise includes registers for storing the variables and parameters required for this execution.

The steps of the method for updating at least one cryptographic key pair and associated public key certificate may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

In some embodiments, the programmable electronic device 110 is implemented in a server.

Referring now to **Figure 4****,** we describe a method for updating at least one cryptographic key pair and associated public key certificate in the PKI 100 according to one embodiment of the present disclosure.

In the present embodiment, in a **step S400,** the programmable electronic device 110 executes a set-up phase. The purpose of the set-up phase is to populate the programmable electronic device 110 with relevant data for updating the PKI 100.

For instance, for communicating with the PKI 100 during the update of the PKI 100, the communication between the programmable electronic device 110 and the PKI 100 implements a secured communication channel based on a symmetric encryption scheme. The symmetric encryption scheme is based on a symmetric key known from the programmable electronic device 110 and from the PKI 100. Such symmetric encryption scheme is indeed inherently more resistant to threats linked to quantum computing than asymmetric schemes, in particular when the symmetric key is chosen long enough. In this case, the programmable electronic device 110 needs to be populated with the symmetric key e.g. by the third-party device 120.

In the same way, the programmable electronic device 110 may need to be populated with the PQC algorithm to be used for the update of the PKI 100, as well as with the root public key of the root certificate authority 100a in case the programmable electronic device 110 needs to authenticate the initial certificates of the PKI 100. Such PQC algorithm and root public key are provided to the programmable electronic device 110 e.g. by the third-party device 120.

Consequently, in the present embodiment, in order to populate the relevant data in the programmable electronic device 110, during a step **S400a,** the programmable electronic device 110 establishes a secured communication channel between the programmable electronic device 110 and the third-party device 120. The secured communication channel is e.g. based on an asymmetric encryption scheme using a first key pair populated in the programmable electronic device 110 (e.g. by direct storage in the non-volatile memory 303 of the programmable electronic device 110 at a manufacturing level). Accordingly, during step S400a, the programmable electronic device 110 executes:
- receiving, from the third-party device 120, a second public key; and
- sending, to the third-party device 110, a first public key encrypted with the second public key.

Thus, the third-party device 120 is able to decrypt the first public key using the second private key, the second public key and the second private key forming a second key pair populated in the third-party device 120. Having the first public key, the third-party device 120 is thus able to send the relevant data (e.g. the symmetric key (see step S400b below), the root public key (see step S400c below), the PQC algorithm (see step S400d below), etc.) to the programmable electronic device 110 in an encrypted form using the first public key. Conversely, the programmable electronic device 110 is able to decrypt the relevant information sent by the third-party device 120 using the first private key, the first public key and the first private key forming the first key pair populated in the programmable electronic device 110. For instance, the first key pair comprising a first public key and a first private key is e.g. a one-time asymmetric key pair valid a short time slot.

However, in some embodiments, the step S400a is not executed, e.g. if the first public key is already populated in the third-party device 120 (e.g. through a key ceremony).

Back to Figure 4, during a step **S400b,** the programmable electronic device 110 receives, from the third-party device 120, the symmetric key through the secured communication channel established during step S400a.

Thus, there is no need for a key ceremony between the third-party device 120 and the programmable electronic device 110. The symmetric key can be populated remotely into the programmable electronic device 110 by the third-party device 120.

However, in some embodiments, the step S400b is not executed, e.g. if the symmetric key is already populated in the programmable electronic device 110 (e.g. by direct storage in the non-volatile memory 303 of the programmable electronic device 110 at a manufacturing level or through a key ceremony between the third-party device 120 and the programmable electronic device 110).

Back to Figure 4, during a step **S400c,** the programmable electronic device 110 receives, from the third-party device 120, the root public key through the secured communication channel established during step S400a.

However, in some embodiments, the step S400c is not executed, e.g. if the root public key is already populated in the programmable electronic device 110 (e.g. by direct storage in the non-volatile memory 303 of the programmable electronic device 110 at a manufacturing level or through a key ceremony between the third-party device 120 and the programmable electronic device 110).

Back to Figure 4, during a step **S400d,** the programmable electronic device 110 receives, from the third-party device 120, the PQC algorithm through the secured communication channel established during step S400a.

Thus, the PQC algorithm(s) used by the programmable electronic device 110 can be updated easily. Such PQC algorithm is e.g. a PQC standard algorithm like the FIPS 203, FIPS 204, FIPS 205 or Falcon algorithm as defined by the NIST, or a FrodoKEM algorithm as defined by the BSI.

However, in some embodiments, the step S400d is not executed, e.g. if the PQC algorithm is already populated in the programmable electronic device 110 (e.g. by direct storage in the non-volatile memory 303 of the programmable electronic device 110 at a manufacturing level).

In some embodiments, none of the steps S400b, S400c and S400d are executed, e.g. if the respective data are already populated in the programmable electronic device 110. In such embodiments, there is no need for establishing a secured communication channel between the programmable electronic device 110 and the third-party device 120. In such cases, the step S400a is not executed.

Back to Figure 4, during a step **S410,** the programmable electronic device 110 receives, from the PKI 100, one (or more) certificate associated with a respective certificate authority 100a, 100b, 100c of the PKI 100.

During a step **S420,** the programmable electronic device 110 authenticates the at least one received certificate. More particularly, during the step S420, the programmable electronic device 110 executes:
- a step S420a wherein the programmable electronic device 110 sends an initial challenge to the root certificate authority 100a;
- a step S420b wherein the programmable electronic device 110 receives from the root certificate authority 100a the challenge signed with a root private key of the root certificate authority 100a, the root private key and the root public key forming a key pair; and
- a step S420c wherein the programmable electronic device 110 verifies the signed challenge with the root public key delivering a verified challenge.

In case the verified challenge is different from the initial challenge, the received certificate(s) is/are not authenticated. In this case, the programmable electronic device 110 does not execute the remaining steps of the present method (steps S430, S440 and S450 below).

Conversely, in case the verified challenge is equal to the initial challenge, the received certificate(s) is/are authenticated. In this case, the programmable electronic device 110 executes at least the steps S430 and S450 as discussed below.

However, in some embodiment, the step S420 is not executed and the programmable electronic device 110 systematically executes the remaining steps of the present method (at least the steps S430 and S450 as discussed below) as if the received certificate(s) had been authenticated.

Back to Figure 4, in case the received certificate(s) is/are authenticated, the programmable electronic device 110 executes the **step S430** wherein the programmable electronic device 110 generates, for a given received certificate, a quantum-resistant key pair and a respective updated certificate for the public key of the quantum-resistant key pair, e.g. implementing the PQC algorithm received during execution of step S400d. Such updated certificate for the public key of the quantum-resistant key pair can be as well a classical certificate, a quantum-resistant certificate or a hybrid certificate.

In case the received certificates comprise at least two certificates, the programmable electronic device 110 executes the **step S440** wherein the programmable electronic device 110 signs the respective updated certificate. More particularly, when the received certificates comprise:
- a first certificate associated with a first certificate authority 100a (or 100b) having a given rank in the PKI 100; and
- a second certificate associated with a second certificate authority 100b (or 100c) having a rank following the given rank in the PKI 100,
the programmable electronic device 110 signs the updated second certificate with the private key of the quantum-resistant key pair generated for the first certificate authority.

Thus, the programmable electronic device 110 signs (or encrypts) the public key certificate(s) so that the PKI 100 does not need to have the knowledge of the PQC algorithms used.

In some embodiments, the first certificate authority is the root certificate authority 100a.

Back to Figure 4, the programmable electronic device 110 executes the **step S450** wherein the programmable electronic device 110 transmits, to the PKI 100, the quantum-resistant key pair and the respective signed updated certificate.

However, in embodiments wherein the step S440 is not executed, during the step S450 the programmable electronic device 110 transmits, to the PKI 100, the quantum-resistant key pair and the respective updated certificate as generated by execution of the step S430.

According to the present technics, the PKI 100 itself does not need to have the knowledge of the PQC algorithms to be used. Furthermore, the electronic device 110 being programmable, the PQC algorithms to be used can be updated easily and so do the key pairs and certificates to be used in the PKI 100. This provides flexibility in the key pairs and certificates to be used in the PKI 100.

## Claims

1. Method for updating, in a public-key infrastructure (100), a cryptographic key pair and a certificate for the public key of the key pair, the key pair and the certificate associated with a certificate authority,
**characterized in that** the method executed by a programmable electronic device (110) comprises:
- receiving (S410), from the public-key infrastructure, the certificate;
wherein for the received certificate, the method further comprises:
- generating (S430) a quantum-resistant key pair and an updated certificate for the public key of the quantum-resistant key pair; and
- transmitting (S450), to the public-key infrastructure, the quantum-resistant key pair and the updated certificate.

2. Method according to claim 1, wherein the programmable electronic device is populated with a root public key of a root certificate authority (100a) of the public-key infrastructure,
wherein the method further comprises: authenticating (S420) the certificate, the authenticating comprising:
- sending (S420a) an initial challenge to the root certificate authority;
- receiving (S420b) from the root certificate authority the challenge signed with a root private key of the root certificate authority, the root private key and the root public key forming a key pair; and
- verifying (S420c) the signed challenge with the root public key delivering a verified challenge,
wherein the generating and the transmitting the quantum-resistant key pair and the updated certificate are executed only if the verified challenge is equal to the initial challenge.

3. Method according to claim 1 or 2, wherein the certificate is a first certificate associated with a first certificate authority having a given rank in the public-key infrastructure,
wherein the method further comprises:
- receiving (S410), from the public-key infrastructure, a second certificate associated with a second certificate authority having a rank following the given rank in the public-key infrastructure,
wherein, for the received second certificate, the method further comprises:
- generating (S430) a quantum-resistant second key pair and an updated second certificate for the public key of the quantum-resistant second key pair; and
- signing (S440) the updated second certificate with the private key of the quantum-resistant key pair generated for the first certificate authority,
and wherein the transmitting comprises transmitting the signed updated second certificate.

4. Method according to claim 3, wherein the first certificate authority is the root certificate authority.

5. Method according to any of the claims 1 to 4, wherein said generating the quantum-resistant key pair and the updated certificate implements a Post-Quantum Cryptography standard algorithm.

6. Method according to any of the claims 1 to 5, wherein the communication between the programmable electronic device and the public-key infrastructure implements a secured communication channel based on a symmetric key known from the programmable electronic device and from the public-key infrastructure.

7. Method according to claim 6, wherein the programmable electronic device is in communication with a third-party device (120), the communication between the programmable electronic device and the third-party device implementing a secured communication channel based on an asymmetric encryption scheme using a first key pair implemented in the programmable electronic device,
and wherein the method further comprises a set-up phase (S400) comprising:
- receiving (S400b), from the third-party device, the symmetric key through the secured communication channel.

8. Method according to claim 2 or according to any of the claims 3 to 7 in that it depends on claim 2, wherein the programmable electronic device is in communication with a third-party device, the communication between the programmable electronic device and the third-party device implementing a secured communication channel based on an asymmetric encryption scheme using a first key pair implemented in the programmable electronic device,
and wherein the method further comprises a set-up phase comprising:
- receiving (S400c), from the third-party device, the root public key through the secured communication channel.

9. Method according to claim 5 or according to any of the claims 6 to 8 in that it depends on claim 5, wherein the programmable electronic device is in communication with a third-party device, the communication between the programmable electronic device and the third-party device implementing a secured communication channel based on an asymmetric encryption scheme using a first key pair implemented in the programmable electronic device,
and wherein the method further comprises a set-up phase comprising:
- receiving (S400d), from the third-party device, the Post-Quantum Cryptography standard algorithm through the secured communication channel.

10. Method according to any of the claims 7 to 9, further comprising: establishing (S400a) the secured communication channel based on the asymmetric encryption scheme, the establishing comprising:
- receiving, from the third-party device, a second public key; and
- sending, to the third-party device, a first public key encrypted with the second public key.

11. Computer program product **characterized in that** it comprises program code instructions for implementing a method according to at least one of the claims 1 to 10, when said program is executed on a computer or a processor.

12. Programmable electronic device comprising at least one processor or at least one field-programmable gate array configured for carrying out the steps of the method of any of the claims 1 to 10.
